# FASCICULE DE BREVET EUROPEEN

(11) **EP 0 462 912 B1**
(45) Date de publication et mention de la délivrance du brevet: **06.04.1994**
(21) Numéro de dépôt: 91430012.4
(22) Date de dépôt: 10.06.1991
(51) Int. Cl.: B65G 33/16, B65G 65/46, B65G 65/48

(54) **Dispositif élévateur pour transporter des produits solides à l'état divisé**
Schüttguthebevorrichtung
Elevator for granulate materials

(30) Priorité: 20.06.1990 FR 9008037; 13.07.1990 FR 9009201
(43) Date de publication de la demande: 27.12.1991
(73) Titulaire: TRANSITUBE PROJET (SOCIETE ANONYME), 13100 Aix-en-Provence (FR)
(72) Inventeur: Rastoin, Blaise, F-13008 Marseille (FR)
(74) Mandataire: Moretti, René

(56) Documents cités:
- EP-A- 0 051 550
- EP-A- 0 315 403
- DE-C- 3 841 146
- FR-A- 2 559 459
- GB-A- 2 132 593
- US-A- 3 684 082
- US-A- 4 386 719
- US-A- 4 742 852

## Description

La présente invention a pour objet des dispositifs pour transporter des produits solides à l'état divisé.

Le secteur technique de l'invention est celui de la construction mécanique des appareils de manutention de produits solides pulvérulents ou en grains.

On connaît des dispositifs flexibles hélicoïdaux pour transporter sur de courtes distances des produits solides divisés, qui peuvent être en poudre ou en grains. Ces dispositifs connus, tel que par exemple celui décrit dans la demande de brevet précédente EP O 051 550 de la Société TRANSITUBE PROJET, comportent, d'une part, une gaine tubulaire souple et, d'autre part, à l'intérieur de celle-ci, un organe tournant appelé spire hélicoïdale, qui peut être un fil enroulé en hélice à la manière d'un ressort hélicoïdal ou bien une brosse hélicoïdale composée de brins implantés suivant une hélice sur une tige axiale souple. Un tel transporteur ou convoyeur peut servir d'élévateur des produits. La gaine et la spire hélicoïdale étant déformables, il présente l'avantage de pouvoir être déformé. La spire hélicoïdale est entraînée en rotation en général par son extrémité supérieure et elle provoque le déplacement du produit divisé à l'intérieur de la gaine dans un sens déterminé, qui dépend du sens de rotation et du sens d'enroulement de la spire. La gaine comporte une ouverture d'entrée des produits située à proximité de son extrémité inférieure et une ouverture de sortie des produits située à proximité de la deuxième extrémité supérieure.

De tels transporteurs sont utilisés pour prélever un produit solide à l'état divisé dans une trémie ou un récipient et pour le transporter vers un lieu d'utilisation ou de stockage dudit produit, qui peut être situé à un niveau plus élevé. Dans une telle application, l'extrémité inférieure de l'élévateur flexible est le plus souvent plongée dans le produit divisé contenu dans la trémie, ce qui exige d'équiper la trémie ou l'élévateur de moyens pour supporter l'élévateur dans la trémie.

Si l'on veut utiliser un même élévateur pour prélever des produits successivement dans plusieurs trémies ou une même trémie pour alimenter successivement plusieurs élévateurs, cela nécessite des temps morts pour séparer chaque fois une trémie d'un élévateurs, plongeant dans la trémie. De plus l'extrémité inférieure de la gaine de ces élévateurs flexibles connus est généralement ouverte et elle sert d'ouverture d'entrée des produits dans la gaine à partir de laquelle les produits sont élevés à l'intérieur de la gaine par les poussées dues à la spire hélicoïdale tournante. Toutefois, à l'entrée de la gaine, la spire hélicoïdale qui dépasse en dehors de celle-ci a tendance à repousser les produits divisés vers l'extérieur, ce qui tend à réduire le débit de l'élévateur.

On connaît par ailleurs le brevet US 4.386.719 de Monsieur N. SERIZAWA qui décrit un dispositif d'alimentation forcée d'un produit dans une ouverture, pratiquée à la partie inférieure du fond conique d'un cylindre, grâce à un bras rotatif épousant la forme du fond.

Un objectif de la présente invention est de procurer des dispositifs pour transporter des produits solides à l'état divisé contenus dans une trémie au moyen d'un élévateur hélicoïdal flexible en simplifiant au maximum les moyens d'assemblage entre la trémie et l'élévateur, de telle sorte que l'on puisse utiliser un même élévateur pour prélever des produits divisés successivement dans plusieurs trémies ou que l'on puisse utiliser une même trémie pour alimenter successivement plusieurs élévateurs sans perte de temps excessives, lors des changements de trémie ou lors des changements d'élévateur.

Un autre objectif de la présente invention est de procurer des dispositifs pour transporter des produits divisés, contenus dans des trémies au moyen d'élévateurs flexibles, qui sont soutenus par un support permettant de modifier facilement la forme de l'élévateur flexible pour adapter celle-ci aux positions relatives de la trémie qui contient le produit divisé et du récipient, qui doit recevoir ce produit à la sortie de l'élévateur.

Un autre objectif de la présente invention est de procurer des dispositifs élévateurs comportant au pied de l'élévateur un dispositif d'admission qui facilite l'entrée des produits dans l'élévateur et qui améliore le débit de celui-ci.

Les objectifs principaux de l'invention sont atteints au moyen d'un dispositif selon la revendication 1.

Un autre objectif de l'invention est atteint au moyen d'un élévateur flexible coaxial dans lequel l'extrémité inférieure de la gaine est ouverte et est située coaxialement à l'intérieur d'un récipient cylindrique, qui comporte au moins une pale rotative qui est située à proximité du fond dudit récipient et qui a une forme telle qu'elle repousse les produits divisés, arrivant de ladite trémie par tout moyen par le dessus dudit récipient, vers le centre de celui-ci.

L'invention a pour résultat de nouveaux dispositifs pour transporter des produits divisés qui sont composés d'une trémie contenant lesdits produits et d'un élévateur accolé à ladite trémie et facilement séparable de celle-ci pour prélever les produits contenus dans la trémie et pour les transporter vers un deuxième récipient de stockage ou vers un lieu d'utilisation de ces produits.

Les dispositifs selon l'invention comportent une trémie qui est équipée d'une ou plusieurs pales tournantes situées dans le fond de la trémie, qui poussent les produits vers une ouverture de sortie située à la périphérie de la trémie, sur laquelle on peut venir raccorder temporairement l'ouverture d'entrée des produits d'un élévateur flexible accolé à l'extérieur de la trémie et facilement séparable de celle-ci, lequel élévateur flexible est suspendu à une potence.

Ainsi, on peut utiliser des trémies mobiles montées sur roues que l'on peut venir raccorder successivement sur un même élévateur.

Le mode de réalisation, dans lequel l'extrémité inférieure de l'élévateur est disposée coaxialement dans un petit récipient cylindrique, permet d'associer par une goulotte intermédiaire, ou d'accoler directement, un élévateur à une trémie pour transporter les produits contenus dans celle-ci, sans avoir à effectuer aucune connexion mécanique entre la trémie et l'élévateur, de sorte que les opérations de changement de trémies ou d'élévateurs sont très rapides : en effet ce petit récipient cylindrique associé à l'extrémité inférieure de l'élévateur flexible coaxial peut être alors engagé soit sous des goulottes inclinées d'alimentation reliées à tous types de sortie soit latérales soit inférieures d'une trémie, soit directement sous des trémies comportant une ouverture de sortie à la périphérie du fond.

De plus dans ce cas si le récipient comporte lui-même une pale rotative repoussant les produits divisés vers le centre de ce récipient, ce dispositif d'admission des produits dans l'ouverture d'entrée de l'élévateur a pour résultat d'obtenir un plus grand débit de l'élévateur pour une même vitesse d'entraînement de la spire hélicoïdale et pour une même dépense d'énergie.

Par ailleurs, les potences de suspension de l'élévateur composées d'un pilier vertical et d'un bras télescopique articulé au sommet dudit pilier, permettent de modifier rapidement la courbure et donc la forme de l'élévateur pour adapter celui-ci à la position relative de la trémie contenant le produit divisé par rapport au point où ce produit doit être délivré.

La description suivante se réfère aux dessins annexés qui représentent, sans aucun caractère limitatif, des exemples de réalisation de dispositifs élévateurs selon l'invention.

La figure 1 est une vue en élévation avec coupe partielle d'un dispositif selon l'invention.

La figure 2 est une coupe selon II-II de la figure 1.

La figure 3 est une vue en élévation avec coupe partielle d'un autre mode de réalisation selon l'invention.

La figure 4 est une vue en élévation d'un autre mode de réalisation.

La figure 5 est une vue en perspective et une coupe partielle de l'extrémité inférieure de l'élévateur de la figure 4.

La figure 6 est une vue en perspective avec arrachement partiel de l'extrémité inférieure d'un élévateur particulier suivant les figures 4 et 5.

La figure 7 est une coupe suivant VII-VII de la figure 6.

La figure 8 est une vue en élévation d'une autre réalisation d'un dispositif selon l'invention.

La figure 9 est une coupe verticale d'un autre mode de réalisation d'un dispositif selon l'invention.

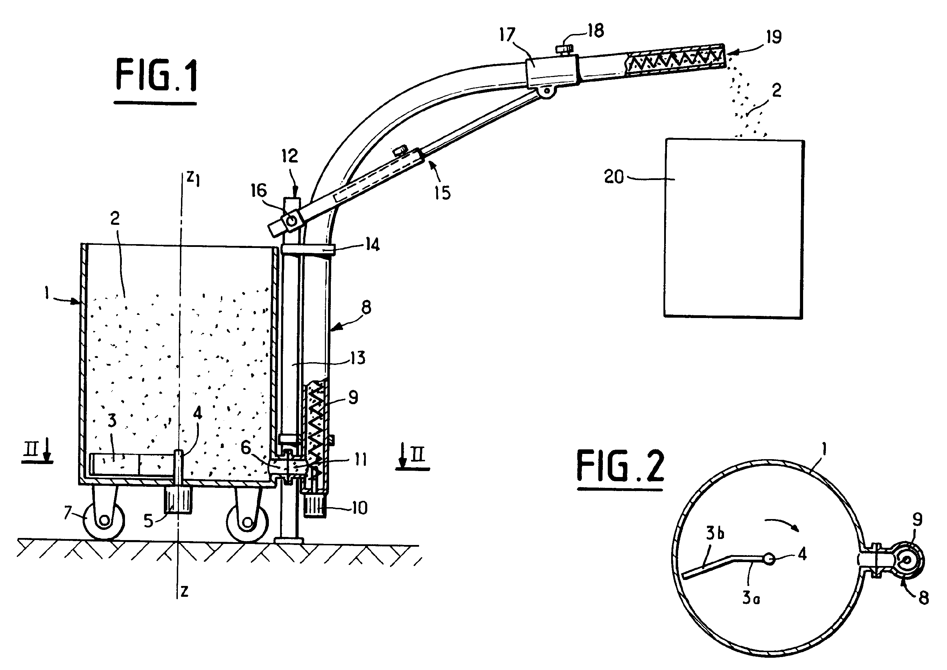

La figure 1 représente une trémie ou cuve cylindrique 1 ayant un axe vertical zz1. De préférence, le fond de la trémie est plat, mais il pourrait également être conique. La trémie 1 contient un produit solide 2 à l'état pulvérulent, en poudre ou en grains, que nous appellerons un produit à l'état divisé.

La trémie 1 est équipée d'une ou plusieurs pales 3 qui sont montées sur un arbre axial 4, qui est entraîné en rotation par un moteur 5 disposé sous la trémie.

Les pales ont une forme telle que lorsqu'elles tournent, elles poussent les produits vers la périphérie.

La figure 2 représente une coupe horizontale d'une trémie 1 équipée d'un arbre axial 4, qui est entraîné en rotation dans le sens des aiguilles d'une montre. Cet arbre porte une ou plusieurs pales, qui comportent au départ de l'arbre, une partie radiale 3a, suivie d'une partie 3b qui est inclinée vers l'arrière par rapport au sens de rotation.

La partie inclinée de la pale exerce sur les produits une poussée perpendiculaire à la pale, qui a donc une composante centrifuge, qui repousse les produits vers la paroi de la trémie.

Selon un autre mode de réalisation, les pales 3 peuvent être des pales flexibles qui se courbent automatiquement vers l'arrière par rapport au sens de rotation et qui exercent également sur les produits 2 une poussée dirigée vers la périphérie.

La trémie 1 comporte une ouverture de sortie des produits 6 qui est située dans la paroi latérale à proximité du fond de la trémie, de sorte que les produits 2 sont poussés par les pales vers cette sortie.

La trémie 2 est montée sur des roues, de sorte qu'elle est déplaçable.

Un élévateur hélicoïdal flexible 8 est accolé à la trémie 1. Cet élévateur est d'un type connu comportant une gaine tubulaire flexible et, à l'intérieur de celle-ci, une spire hélicoïdale 9 qui est entraînée en rotation par son extrémité inférieure par un moteur 10.

La spire hélicoïdale 9 peut être constituée par un fil enroulé en hélice comme un ressort hélicoïdal. Elle peut également être constitué d'une brosse composée de brins, par exemple des crins ou des brins d'acier, implantés suivant une hélice sur une tige axiale qui est entraînée en rotation par une de ses extrémités. La gaine externe et la spire hélicoïdale étant toutes deux flexibles, l'élévateur hélicoïdal peut donc être déformé, par exemple il peut être courbé vers l'extérieur comme le montre la figure 1.

La gaine externe de l'élévateur 8 comporte, à proximité de son extrémité inférieure, une ouverture 11 d'entrée des produits qui est équipée d'un raccord permettant de la connecter temporairement à l'ouverture de sortie 6 de la trémie et de la déconnecter facilement de celle-ci. Le raccord est constitué par exemple par des brides. L'élévateur flexible 8 est fixé à une potence 12.

Selon un mode de réalisation préférentiel, la potence 12 comporte un pilier vertical 13 auquel la partie inférieure de l'élévateur est fixée par des colliers 14. Elle comporte, en outre, un bras télescopique 15 qui est monté pivotant autour d'une articulation à axe horizontal 16, qui le relie à la partie supérieure du pilier 13. L'articulation 16 est blocable, ce qui permet de modifier l'inclinaison du bras 15, puis de le bloquer dans une position déterminée.

L'extrémité libre du bras 15 porte un manchon 17, qui est relié au bras par une articulation. L'élévateur 8 passe à travers le manchon qui comporte des moyens, par exemple une vis 18, qui permettent de bloquer l'élévateur dans le manchon.

Après qu'on a bloqué l'articulation 16 et la vis 18, l'élévateur est maintenu dans une position déterminée.

Ainsi, en faisant varier la longueur et l'inclinaison du bras télescopique 15, il est possible de faire varier la hauteur et la distance de l'extrémité libre 19 de l'élévateur à travers laquelle les produits divisés 2, venant de la trémie 1, se déversent dans un récipient 20.

Dans les installations de ce type connues comportant un élévateur hélicoïdal, celui-ci est généralement plongé directement dans les produits 2 contenus dans la trémie, ce qui nécessite soit une installation fixe, soit des manutentions et des moyens de support de l'élévateur.

La disposition selon l'invention, dans laquelle l'élévateur flexible est accolé de façon amovible à une trémie et est maintenu par une potence, permet de dissocier facilement la trémie de l'élévateur.

Ainsi on peut utiliser des trémies mobiles que l'on peut connecter successivement à un même élévateur fixe.

Réciproquement, on peut utiliser un même élévateur mobile pour vider successivement plusieurs trémies.

La trémie 1 est équipée d'une pale tournante 3, peut être utilisée pour brasser des produits divisés 2 afin de les homogénéiser. Dans ce cas, il suffit de boucher l'ouverture de sortie 6 pendant qu'on fait tourner la pale.

Après avoir connecté une trémie 1 équipée d'une pale tournante sur un élévateur 8, on peut mettre en route le moteur 5 avant de mettre en route le moteur 10 de l'élévateur, ce qui permet également de brasser les produits avant de commencer l'extraction de ceux-ci par l'élévateur.

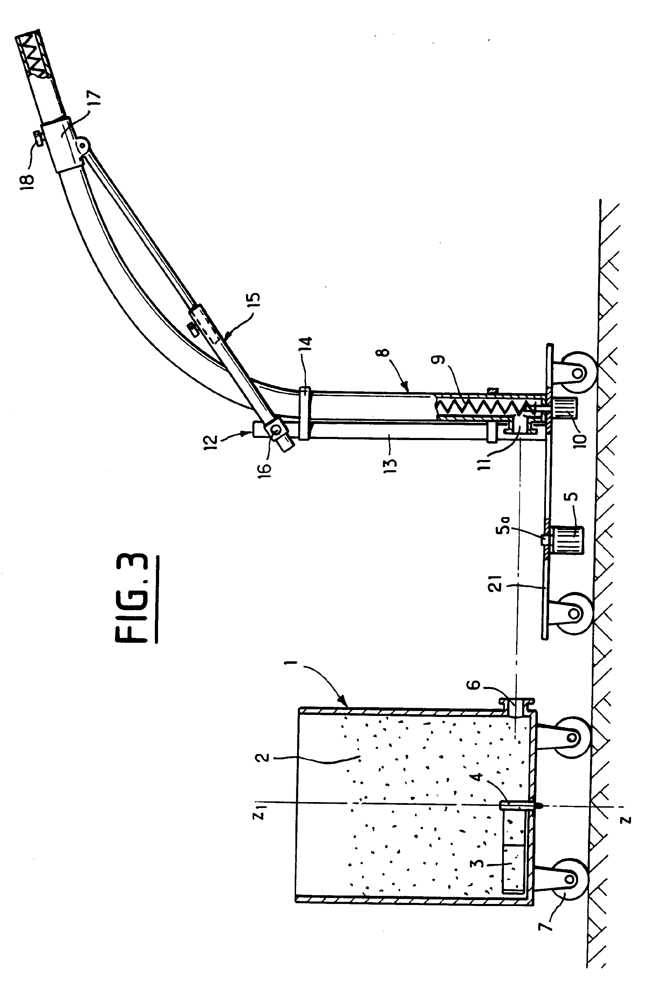

La figure 3 est une vue en élévation d'un deuxième mode de réalisation d'un dispositif selon l'invention. Les parties homologues sont représentées par les mêmes repères que sur la figure 1.

Dans ce mode de réalisation, la trémie cylindrique 1 concernant des produits divisés 2 est équipée d'un bout d'arbre axial 4 portant une ou plusieurs pales 3 qui repoussent les produits vers la périphérie où se trouvent une ouverture de sortie 6.

L'élévateur hélicoïdal flexible 8 est toujours fixé à une potence 12 comportant un pilier vertical 13 et un bras télescopique 15, qui est relié au sommet du pilier 13 par une articulation blocable 16.

La potence 12 est montée sur une plaque de base horizontale 21 qui est surélevée par rapport au sol et qui porte sur sa face inférieure un moteur 5, qui entraîne la spire hélicoïdale de l'élévateur.

Les hauteurs relatives au-dessus du sol du fond de la trémie 1 et de la plaque de base 21 sont telles que la trémie 1 qui est montée sur des roues 7 peut venir se positionner au-dessus de la plaque de base et que l'arbre axial 4 de la trémie peut être connecté au moteur d'entraînement 5 par un accouplement 5a. Dans cette position, la sortie 6 de la trémie est connectée de façon amovible sur l'entrée 11 de l'élévateur.

En variante, la plaque de base 21 peut être montée sur un chariot, de telle sorte que l'on peut l'engager sous des trémies 1 qui peuvent être fixes à condition que leur fond soit surélevé pour ménager le passage de la plaque de base 21.

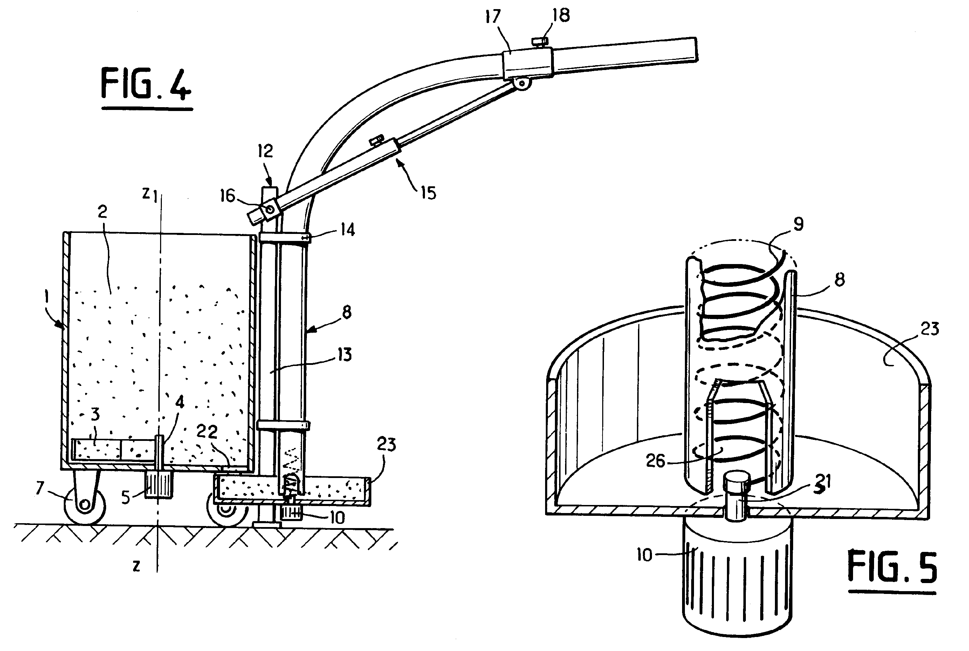

La figure 4 représente une vue en élévation d'un troisième mode de réalisation. Les parties homologues sont représentées par les mêmes repères.

Dans ce mode de réalisation, la trémie 1 comporte une ouverture 22 de sortie des produits 2, qui est découpée dans le fond de la trémie à proximité de la paroi.

L'extrémité inférieure de la gaine de l'élévateur hélicoïdal 8 plonge dans un petit récipient circulaire 23 que l'on positionne au-dessous de l'ouverture 22.

Les produits 2 contenus dans la trémie 1 sont repoussés vers l'ouverture périphérique 22 par une pale tournante 3. Ils tombent dans le récipient 23 où ils sont repris par l'élévateur 8. Ce mode de réalisation présente l'avantage de ne nécessiter aucune connexion entre la trémie et l'élévateur.

Selon un mode de réalisation préférentiel, l'élévateur 8 est coaxial avec le récipient 23. Le moteur 10 entraînant la spire hélicoïdale de l'élévateur est disposé sous le récipient 23.

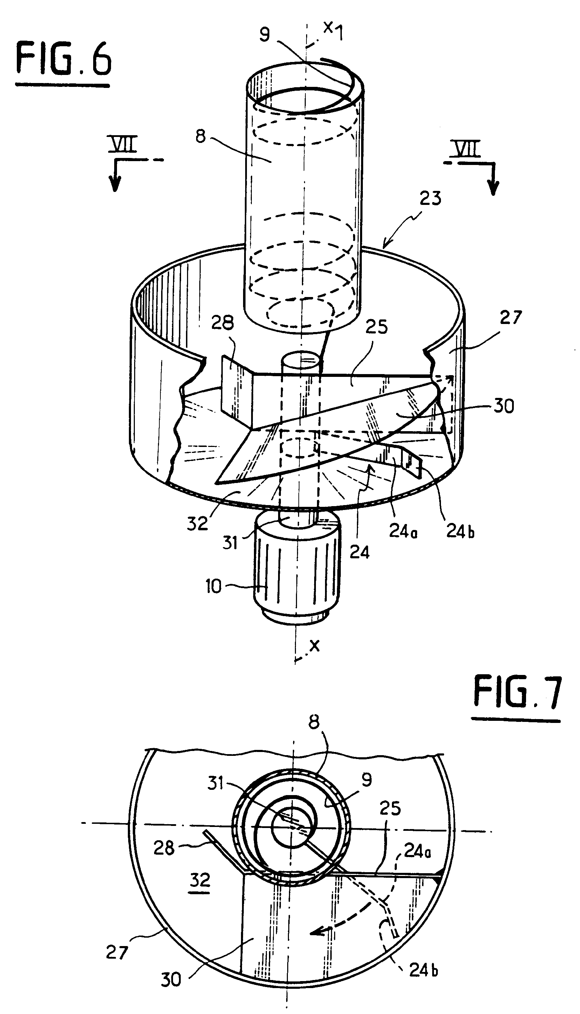

La figure 5 est une vue partielle en perspective d'un mode de réalisation selon la figure 4. On voit sur cette figure une coupe du récipient 23, et l'extrémité inférieure de l'élévateur flexible qui comporte une spire hélicoïdale 9 et une gaine externe 8 dont l'extrémité inférieure est disposée coaxialement au récipient 23. La gaine 8 comporte, à sa partie inférieure, une ouverture latérale 26, qui occupe une partie de la section de la gaine. Avantageusement, la largeur de l'ouverture 26 décroît en montant.

Les figures 6 et 7 représentent l'extrémité inférieure d'un élévateur flexible tel que représenté figures 4 et 5.

Comme décrit précédemment cet élévateur flexible comporte une gaine tubulaire flexible 8 et une spire hélicoïdale 9 qui est située à l'intérieur de la gaine 8 et qui est entraînée en rotation par un moteur 10, qui entraîne un bout d'arbre vertical 31, sur lequel une extrémité de la spire hélicoïdale 9 est fixée.

Cette extrémité inférieure de la gaine 8 est dans ce mode de réaliosation ouverte entièrement vers le bas et sert d'ouverture d'entrée des produits divisés dans l'élévateur.

L'extrémité inférieure de la gaine 8 est disposée coaxialement à l'intérieur d'un petit récipient cylindrique 23, d'axe xx1, composé d'un fond 32 et d'une paroi latérale cylindrique 27.

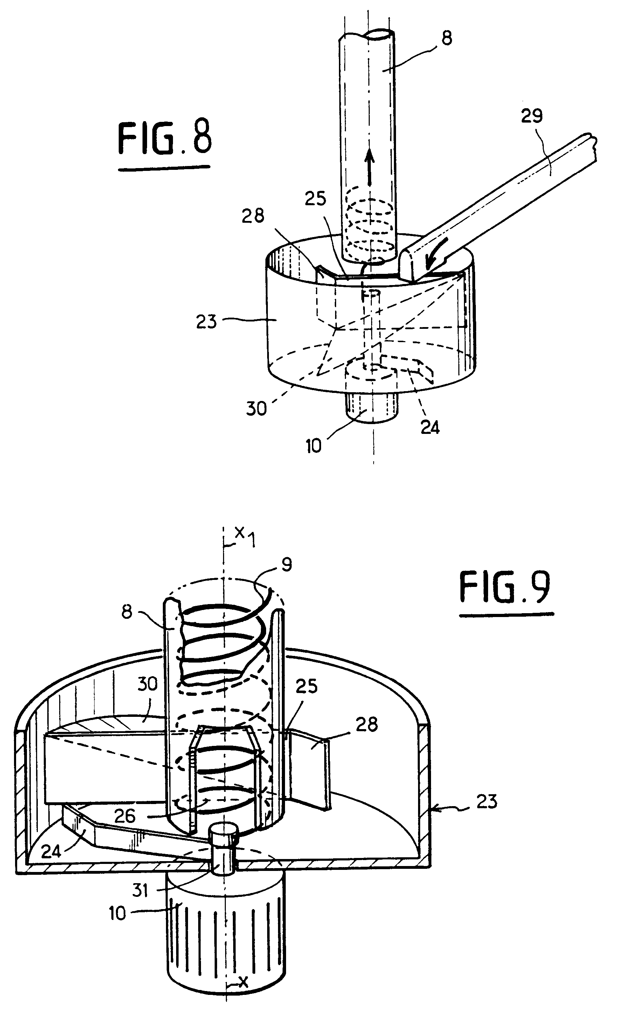

Le récipient 23 peut également comporter un couvercle. Les produits divisés qui doivent être transportés par l'élévateur arrivent dans le récipient 23 soit, comme décrit dans la figure 4, directement par une ouverture ménagée à la périphérie d'une trémie, soit, comme dans la figure 8, à travers une goulotte connectée à toute sortie de ladite trémie. Le récipient 23 comporte une ou plusieurs pales rotatives 24, qui sont fixées sur l'arbre 31 et qui sont entraînées en rotation par celui-ci, par exemple dans le sens des aiguilles d'une montre.

Les pales 24 sont situées juste au-dessus du fond 32 ou à proximité de celui-ci.

Elles ont une forme telle qu'elles repoussent les produits divisés vers le centre du récipient 23. Par exemple chaque pale 24 comporte, à partir du centre, une portion radiale 24a, qui est prolongée par un tronçon 24b incliné vers l'avant par rapport au prolongement de la portion radiale, c'est-à-dire que le tronçon incliné 24b est dirigée en direction du sens de rotation, par exemple dans le sens des aiguilles d'une montre dans le cas de la figure.

Il en résulte que la poussée exercée par la partie inclinée 24b sur les produits divisés contenus dans le récipient 23 a une composante dirigée vers le centre du récipient.

Avantageusement, le récipient 23 comporte, en outre, une cloison verticale fixe 25, qui est située au-dessus des pales tournantes. La cloison 25 est fixée par une de ses extrémités à la paroi cylindrique 27.

Avantageusement. l'autre extrémité de la cloison 25 est libre et elle est prolongée par un tronçon de cloison 28 qui forme un dièdre obtus avec la cloison 25.

Le tronçon 28 est incliné vers l'avant par rapport au prolongement de la cloison 25;

L'arbre d'entraînement 31 se situe à l'intérieur du dièdre obtus formé par la cloison 25 et le prolongement 28.

Le fonctionnement est le suivant :

La spire hélicoïdale 9 déborde hors de l'extrémité inférieure de la gaine 8.

Lorsque la spire hélicoïdale 9 est mise en rotation, la partie qui déborde hors de la gaine a tendance à repousser les produits divisés vers l'extérieur. Les pales 24, qui sont entraînées en rotation ramènent les produits divisés vers le centre du récipient 23. La cloison 25, qui s'étend en travers du récipient 23, au-dessus des pales tournantes 24, évite que les produits divisés ne tournent continuellement dans le récipient. Il en résulte que les produits divisés s'accumulent au centre du récipient 23 et sont entraînés à l'intérieur de la gaine 8, ce qui a pour effet d'augmenter le débit de l'élévateur pour une même vitesse de rotation de la spire hélicoïdale.

Les figures 6 et 7 représentent un mode de réalisation particulier dans lequel les produits divisés arrivent dans le récipient 23 en un endroit donné soit par une goulotte inclinée comme dans la figure 8 ou par tout autre moyen équivalent comme dans la figure 4. Dans ce cas, le récipient 23 comporte une plaque inclinée 30, qui est située du côté de la cloison 25 opposé à l'arbre d'entraînement. Les produits divisés tombent sur la plaque inclinée 30 et glissent le long de celle-ci.

Pendant qu'ils glissent le long de la plaque inclinée 30, les produits divisés sont protégés de l'effet perturbateur dû aux pales 24, ainsi que de l'effet centrifuge dû à la spire hélicoïdale 9.

La figure 8 représente un autre exemple de réalisation d'un dispositif élévateur selon l'invention.

Dans cette réalisation, les produits solides à l'état divisé arrivent dans le récipient 23 par une goulotte inclinée 29 connectée et provenant par exemple d'une sortie 6 telle que représentée figure 1.

Le récipient 23 comporte à la fois des pales tournantes 24, une cloison verticale 25 et une plaque inclinée 30, et l'extrémité inférieure de la goulotte 29 est située à la verticale de la partie supérieure de la plaque inclinée 30.

La figure 9 représente un autre exemple de réalisation de la partie d'un dispositif élévateur selon les figures 5 ou 6. On voit sur cette figure 9 la cloison verticale 25, 28 située dans le récipient 23, au-dessus des pales tournantes et à l'arrière de l'extrémité inférieure de l'élévateur.

On voit également la plaque inclinée 30, qui est située à l'arrière de la cloison 25.

Le récipient 23 est positionné par rapport à la trémie 1, de telle sorte que l'ouverture 22 se situe à la verticale de la partie haute de la plaque inclinée 30 et les produits divisés tombant de l'ouverture 22 glissent le long de la plaque inclinée 30.

Dans cet exemple, comme dans celui de la figure 5, la gaine 8 de l'élévateur descend à l'intérieur du récipient 23 et elle comporte une ou plusieurs ouvertures latérales 26 à travers lesquelles les produits pénètrent dans la gaine.

## Revendications

1. Dispositif élévateur pour transporter des produits solides à l'état divisé, constitué d'une part, d'une trémie cylindrique (1) à axe vertical (zz1), et d'autre part, d'un élévateur flexible hélicoïdal (8) comportant une spire hélicoïdale (9), entraînée en rotation dans une gaine externe flexible, lequel élévateur est accolé à ladite trémie, et comporte une ouverture d'entrée des produits qui reçoit ceux-ci sortant d'une ouverture (6) de la trémie, caractérisé en ce que :
- ladite trémie est équipée d'une ou plusieurs pales tournantes (3), montées sur un arbre relié (4) axialement à des moyens d'entraînement (5), disposés sous la trémie, et qui repoussent lesdits produits divisés (2) contenus dans la trémie vers ladite ouverture de sortie (6) située à la périphérie de la trémie;
- ledit élévateur est suspendu à une potence (12);
- au moins l'un ou l'autre de ladite trémie et de ladite potence supportant ledit élévateur sont mobiles et déconnectables l'un par rapport à l'autre, de sorte qu'il est possible d'accoler successivement plusieurs trémies à un même élévateur ou plusieurs élévateurs à une trémie;
- et l'extrémité inférieure de l'élévateur flexible hélicoïdal (8) est fixée au-dessus d'un fond sous lequel est monté un moyen d'entraînement en rotation (10) dudit élévateur hélicoïdal.

2. Dispositif élévateur selon la revendication 1, caractérisé en ce que ledit élévateur flexible hélicoïdal (8) et ladite potence (12) sont montés sur une même plaque de base horizontale (21) portant, sur sa face inférieure, lesdits moyens d'entraînement en rotation (10 et 5) dudit élévateur hélicoïdal et dudit arbre d'entraînement axial (4).

3. Dispositif élévateur suivant l'une quelconque des revendications 1 ou 2, caractérisé en ce que ladite trémie (1) comporte un ouverture de sortie (6). située à la partie inférieure de sa paroi latérale et ledit élévateur hélicoïdal comporte, à proximité de son extrémité inférieure, une ouverture d'entrée des produits (11), lesquelles ouvertures de sortie (6) et d'entrée (11) sont équipées de moyens de connexion permettant de les connecter temporairement et de les déconnecter facilement.

4. Dispositif élévateur selon l'une quelconque des revendications 1 et 2, caractérisé en ce que l'extrémité inférieure de ladite gaine (8) de l'élévateur flexible est situé coaxialement à l'intérieur d'un récipient cylindrique, qui comporte au moins une pale de rotation (24), qui est située à proximité du fond dudit récipient et qui a une forme telle qu'elle repousse les produits divisés, arrivant de ladite trémie (1) par le dessus dudit récipient, vers le centre de celui-ci.

5. Dispositif selon la revendication 4, caractérisé en ce que ledit élévateur hélicoïdal (8) est coaxial avec ledit récipient cylindrique (23) et un moteur (10), disposé au-dessous dudit récipient, entraîne un bout d'arbre axial (31) qui entraîne en rotation ladite spire hélicoïdale (9).

6. Dispositif selon l'une des revendications 4 et 5, caractérisé en ce que ledit récipient cylindrique (23) comporte, en outre, une cloison verticale fixe (25), qui est située en travers dudit récipient, au-dessus des dites pales rotatives (24).

7. Dispositif selon la revendication 6, caractérisé en ce que ledit récipient cylindrique (23) comporte, en outre, une plaque inclinée fixe (30), qui est située entre ladite cloison fixe (25) et la paroi cylindrique (27) dudit récipient, du côté de ladite cloison fixe opposée à l'axe (xx1).

8. Dispositif selon l'une quelconque des revendications 4 à 7, caractérisé en ce que lesdites pales rotatives (24) comportent, en partant de l'axe, une partie radiale (24a), qui est prolongée par une partie (24b), inclinée vers l'avant par rapport au prolongement de ladite partie radiale.

9. Dispositif selon la revendication 7, caractérisé en ce que lesdits produits divisés arrivent dans ledit récipient cylindrique (23) par une goulotte inclinée (29), dont l'extrémité inférieure est située au-dessus de ladite plaque inclinée.

10. Dispositif selon l'une quelconque des revendications 1 et 2, caractérisé en ce que ladite potence comporte un pilier vertical (13), auquel est fixé ledit élévateur hélicoïdal (8) et un bras télescopique (15), qui est relié à l'extrémité supérieure dudit pilier vertical par une articulation blocable (16), lequel bras est relié par son extrémité supérieure audit convoyeur hélicoïdal.

11. Dispositif selon la revendication 10, caractérisé en ce que ledit bras télescopique (15) porte un manchon (17) qui est relié par une articulation à l'extrémité supérieure dudit bras et ledit élévateur hélicoïdal (8) passe à l'intérieur dudit manchon qui comporte des moyens (18) de blocage dudit élévateur dans ledit manchon.

## Patentansprüche

1. Hebevorrichtung zum Transport fester Produkte in schüttfähigem Zustand, bestehend aus einerseits einem zylindrischen Trichter (1) mit vertikaler Achse (zz1) und andererseits einem biegsamen Spiralhebewerk (8) umfassend eine spiralförmige Windung (9), welche drehend in einem biegsamen Außenkanal angetrieben wird, wobei dieses Hebewerk an den besagten Trichter angebaut ist und eine Eintrittsöffnung für die Produkte aufweist, welche diese aus einer Öffnung (6) des Trichters austretend aufnimmt, dadurch gekennzeichnet, daß:
- der Trichter eine oder mehrere Drehschaufeln (3) aufweist, die an eine Welle (4) montiert sind, welche axial mit unter dem Trichter angeordneten Antriebsmitteln (5) verbunden ist, und welche diese schüttfähigen, im Trichter befindlichen Produkte (2) zu der besagten Austrittsöffnung (6) schieben, welche sich am Umfang des Trichters befindet;
- das Hebewerk an einem Träger (12) aufgehängt ist;
- mindestens einer von beiden, der Trichter oder der Träger, welcher das Hebewerk trägt, mobil und voneinander trennbar sind, so daß aufeinanderfolgend mehrere Trichter an ein und dasselbe Hebewerk oder mehrere Hebewerke an einen Trichter gebaut werden können;
- und daß das untere Ende des biegsamen Spiralhebewerks (8) über einem Boden befestigt ist, unter dem Drehantriebsmittel (10) für dieses Spiralhebewerk montiert sind.

2. Hebewerk nach Anspruch 1, dadurch gekennzeichnet, daß das biegsame Spiralhebewerk (8) und der Träger (12) auf ein und dieselbe horizontale Grundplatte (21) montiert sind, welche an ihrer Unterseite die besagten Drehantriebsmittel (10 und 5) für das Spiralhebewerk und die axial angeordnete Antriebswelle (4) trägt.

3. Hebewerk nach Anspruch 1 oder 2, dadurch gekennzeichnet, daß der Trichter (1) eine im unteren Teil seiner Seitenwand angeordnete Austrittsöffnung (6) und das Spiralhebewerk nahe seinem unteren Ende eine Eintrittsöffnung (11) für die Produkte aufweist, wobei diese Austritts- (6) und Eintrittsöffnung (11) über Anschlußvorrichtungen verfügen, mit denen sie vorübergehend angeschlossen und problemlos getrennt werden können.

4. Hebewerk nach einem der Ansprüche 1 und 2, dadurch gekennzeichnet, daß das untere Ende des besagten Kanals (8) des biegsamen Hebewerks koaxial in einem zylindrischen Behälter angeordnet ist, welcher mindestens einen Drehflügel (24) aufweist, der sich nahe am Boden des Behälters befindet und eine geeignete Form hat, um die schüttfähigen Produkte zu schieben, welche vom Trichter (1) durch die Oberseite dieses Behälters in die Mitte desselben gelangen.

5. Vorrichtung nach Anspruch 4, dadurch gekennzeichnet, daß das Spiralhebewerk (8) die gleiche Achse hat wie der zylindrische Behälter (23) und daß ein Motor (10), der unter diesem Behälter angeordnet ist, ein axiales Wellenende (31) antreibt, welches die spiralförmige Windung (9) in Drehung antreibt.

6. Vorrichtung nach einem der Ansprüche 4 und 5, dadurch gekennzeichnet, daß der zylindrische Behälter (23) außerdem eine starre, senkrechte Trennwand (25) aufweist, die quer zu diesem Behälter über den Drehschaufeln (24) angeordnet ist.

7. Vorrichtung nach Anspruch 6, dadurch gekennzeichnet, daß der zylindrische Behälter (23) außerdem eine starre, geneigte Platte (30) aufweist, die sich zwischen der starren Trennwand (25) und der zylindrischen Wand (27) dieses Behälters auf der der Achse (xx1) entgegengesetzten Seite dieser Trennwand befindet.

8. Vorrichtung nach einem der Ansprüche 4 bis 7, dadurch gekennzeichnet, daß die Drehschaufeln (24) ausgehend von der Achse einen Radialbereich (24a) aufweisen, der durch einen Bereich (24b) verlängert wird, der bezüglich der Verlängerung dieses Radialbereichs nach vorne geneigt ist.

9. Vorrichtung nach Anspruch 7, dadurch gekennzeichnet, daß die schüttfähigen Produkte in den zylindrischen Behälter (23) über eine schräg abfallende Schurre (29) gelangen, deren unteres Ende sich über der besagten geneigten Platte befindet.

10. Vorrichtung nach einem der Ansprüche 1 und 2, dadurch gekennzeichnet, daß der besagte Träger einen senkrechten Pfeiler (13) aufweist, an dem das Spiralhebewerk (8) und ein Teleskoparm (15) befestigt sind, welcher mit dem oberen Ende dieses senkrechten Pfeilers über ein feststellbares Gelenk (16) verbunden ist und mit seinem oberen Ende mit dem besagten Schraubenförderer verbunden ist.

11. Vorrichtung nach Anspruch 10, dadurch gekennzeichnet, daß dieser Teleskoparm (15) eine Muffe (17) trägt, die über ein Gelenk mit dem oberen Ende des Arms verbunden ist, und daß das Schraubenhebewerk (8) innen durch diese Muffe führt, die über Arretiervorrichtungen für das Hebewerk in dieser Muffe verfügt.

## Claims

1. Elevator device for transporting solid products in divided state, constituted, on the one hand, of a cylindrical hopper (1) of vertical axis (zz1), and on the other hand, of a flexible helical elevator (8) comprising a helical spire (9), driven in rotation inside an external flexible casing, said elevator being placed next to said hopper, and comprising an inlet for the products which inlet receives said products coming out of an opening (6) of the hopper, characterized in that:
- said hopper is equipped with one or more rotary blades (3), mounted on a shaft (4) connected axially with driving means (5), provided under the hopper, which drive said divided products (2) contained in the hopper towards said outlet (6) situated on the periphery of the hopper:
- said elevator is suspended to a support (12);
- at least either one of said hopper or of said support supporting said elevator are movable and disconnectable one with respect to the other, such as to join successively a plurality of hoppers alongside an elevator or a plurality of elevators alongside a hopper.
- and the lower end of the flexible helical elevator (8) is fixed on top of a bottom under which is mounted a means (10) for driving said helical elevator in rotation.

2. Elevator device according to claim 1, characterized in that said flexible helical elevator (8) and said support (12) are mounted on the same horizontal base plate (21) carrying on its lower face said means (10 and 5) for driving said helical elevator and said axial driving shaft (4) in rotation.

3. Elevator device according to any one of claims 1 or 2, characterized in that said hopper (1) comprises an outlet (6) situated at the lower part of its lateral wall and said helical elevator comprises, close to its lower end, an inlet (11) for the products, said outlet (6) and inlet (11) being equipped with connection means for temporarily connecting them and disconnecting them easily.

4. Elevator device according to any one of claims 1 and 2, characterized in that the lower end of said casing (8) of the flexible elevator is situated co-axially inside a cylindrical container which comprises at least one rotation blade (24), which is situated proximate to the bottom of said container and which is so shaped as to push the divided products arriving up to said hopper (1) through the top of said container, towards the center of the latter.

5. Device according to claim 4, characterized in that said helical elevator (8) is co-axial to said cylindrical container (23) and a motor (10), which is disposed under said container, drives an axial shaft extension (31) which in turn drives said helical spire (9) in rotation.

6. Device according to one of claims 4 and 5, characterized in that said cylindrical container (23) further comprises a fixed vertical wall (25), which is situated across said container, above said rotary blades (24).

7. Device according to claim 6, characterized in that said cylindrical container (23) further comprises a fixed inclined plate (30), situated between the fixed wall (25) and the cylindrical wall (27) of said container, on the side of said fixed wall facing the axis (xx1).

8. Device according to any one of claims 4 to 7, characterized in that said rotary blades (24) comprise, starting from the axis, a radial part (24a) which is extended by a portion (24b) inclined forwardly with respect to the extension of said radial part.

9. Device according to claim 7, characterized in that said divided products arrive into the cylindrical container (3), via an inclined gullet (29) of which the lower end is situated above said inclined plate.

10. Device according to any one of claims 1 and 2, characterized in that said support comprises a vertical column (13), to which said helical elevator (8) is fixed, and a telescopic arm (15) which is connected to the upper end of said vertical column by means of a lockable hinge (16), said arm being connected at its upper end to said helical elevator.

11. Device according to claim 10, characterized in that said telescopic arm (15) carried a sleeve (17) which is conncted via a hinge to the upper end of said arm and said helical elevator (8) passes inside said sleeve which comprises means (18) for locking said elevator in position in said sleeve.
